# EUROPEAN PATENT APPLICATION

(11) **EP 1 726 569 A1**
(43) Date of publication of application: **29.11.2006**
(21) Application number: 06003136.6
(22) Date of filing: 16.02.2006
(51) Int. Cl.: C02F 1/48

(54) **A system for treating a fluid with ultrahigh magnetic fields**

(30) Priority: 25.05.2005 JP 2005152514
(71) Applicant: Morioki Sangyo Company Limited, Setagaya Tokyo (JP)
(72) Inventor: Mori, Yoshiharu, Sewtagaya-ku Tokyo (JP)
(74) Representative: HOFFMANN EITLE

(57) **Abstract**

By subdividing a casing (1) making the body of the magnetic treatment system, are formed 1) a front chamber (12) being shaped into a trapezoidal prism reversely to the fluid flow direction as connected upstream with an inlet (11) for a fluid, 2) a rear chamber (14) being shaped into a trapezoidal prism to the fluid flow direction as connected downstream with an outlet (13) for a fluid, as well as 3) a pair of air-tight magnet chambers (16) being formed on the right and left of the casing where a permanent magnet (17) is housed, respectively, and 4) a prism-shaped magnetic treatment chamber (15) positioned at the center of the casing so that it is communicated with both front and rear chambers. An intermediary unit (28) of magnetic material consisting of a plurality of perforated metal plates (24) and magnetic polar bars (23) is deposited in the magnetic treatment chamber. On the top panel (2) of the casing is provided an air blower (30) having a ball valve with a check valve blowing air into the front chamber, while at the center of said top panel is made a square opening (3). The casing remains sealed air tight by closing the opening with a covering (18).

## Description

### Technical Field to which the invention relates

The invention relates to a system providing improved elements with which a fluid such as contaminated water can optimally be purified according to features of a fluid to be treated, while promoting magnetic treatment efficiency of the system by providing pressurized air bubble, and effectively removing flocs and precipitate by ionizing the fluid.

### Background of art and assessment thereof

Heretofore have been disclosed extensively such elements of the invention that provide a device for treating a fluid with magnetic force where magnets are positioned outside of the device with a view to preventing magnetic materials from adhering to said magnets, thereby improving their durability.

Further, some improved elements of the invention have likewise been disclosed that a plurality of intermediary magnetic units are juxtaposed inside a device perpendicularly to the fluid flow direction so as to effectively produce ultrahigh magnetic fields: Within said device, each of intermediary magnetic units may, whenever necessary for treating a fluid with ultrahigh magnetic fields, be so adjusted as to be positioned by far closer to each other: Also, said device may be scaled up by adjusting the number and/or shape of each intermediary magnetic unit with a view to effectively treating a large volume of a fluid.

According to the prior art, a plurality of intermediary magnetic units were juxtaposed as mutually closer as possible in a device for magnetically treating a fluid in order to produce high magnetic fields. As a consequence, said intermediary magnetic units were more apt to absorb scale and slime. As maintenance of equipment is accordingly required to remove such flocs etc. and clean the device, improvement in the device became that much necessitated, thus increasing production cost more than expected.

And, according to the prior art, improved elements of the invention were provided making one side of the casing constituting a body of a device detachable from the casing for the purpose of facilitating maintenance of equipment, thereby enhancing durability and magnetic efficiency of the device:
Such improvement contributed to facilitating the cleaning or replacing of intermediary magnetic units as installed in a fluid passage. However, magnetic treatment mechanism of such device turned out complex; hence, its compactness and economical features are deemed indispensable.

With economic expansion incessantly growing, the abatement of aggravating environmental pollution is being widely appealed. Under the circumstances are emerging both social concern at, and market demands for, devices for magnetically treating a large volume of water such as rivers and ponds contaminated by inflow of running water.

In order to magnetically treat a large volume of water like rivers and ponds, a scaled-up device was provided so as to accommodate it to the volume of a fluid to be treated, while providing a device with an inlet and outlet for a fluid of wider diameter so as to reduce the resistance of the fluid. However, prior arts have left major economic problems unsolved to a large extent, such as how to innovate the basic construction of an intermediary magnetic unit generating high magnetic fields so as to effectuate treatment of a large volume of water, or how to facilitate removal of magnetic materials adhered to said unit.

It is expected in view of necessities of abating environmental pollution to provide inventions making widely available for industrial utilization a device for treating a fluid effectively with the ultrahigh magnetic field of more than 10,000 gausses when necessary,. Generally, not a few methods of mixing air bubbles or micro bubbles with a polluted fluid are disclosed as a means of enhancing the effect of magnetization of a fluid.

Generally, with magnetic polarity generating in itself, air bubbles are considered effective in conducting magnetic force in case magnetism is applied for fluid treatment. Heretofore, a method of generating a micro bubble has been provided such that an air blower producing air turbulence is generally installed downstream in a device thereby, according to fluid velocity, providing air bubbles to blow into a water pipe through an air nozzle being set in a fluid flow passage. Normally, said blower is equipped within a water pipe in view of providing the easiest way of blowing up an air into a water pipe by taking advantage of varying pressures in the water pipe. However, durability, as well as maintenance such as cleaning, of an air blower likely remains unimproved because the blower comprises a fan which remains exposed all the time to polluted water.

### Disclosure of the invention

A system of the invention is characterized by comprising;
a square opening being perforated at the center of the top panel of a box-shaped casing constituting a body of said system, and,
a front chamber being shaped into a trapezoidal prism reversely to the fluid flow direction, and connected with an inlet for a fluid:
a rear chamber being shaped into a trapezoidal prism to the fluid flow direction, and connected with an outlet for a fluid:
a case-shaped magnetic treatment chamber connecting the front chamber with the rear chamber, and:
a pair of mutually facing magnet chambers in the shape of a trapezoidal prism being each deposited adjacently to said front chamber, magnetic treatment chamber and rear chamber, respectively:
   which are all formed within the casing by subdividing said casing with partition panels being positioned, at the facing sides of such a rectangular parallelepiedas can be formed within the casing in a manner that the opening substitutes for its upper base, and part of the bottom paneof the casing facing said opening, for its lower base, as well as at the respective facing sides of such a pair of trapezoidal prism as can be each formed in a manner that the mutually facing, right side and left side of said rectangular parallelepied substitute for the respective upper bases of said trapezoidal prisms, and both mutually facing right side and left side of the casing, for the respective lower bases of said rectangular parallelepied,
a permanent magnet being housed between, and secured to, both bases of each of said magnet chambers being shaped into a trapezoidal prism,
a covering being laid over the opening so as to make the casing air-tight,
an intermediary magnetic unit being provided such that a plurality of guide grooves are juxtaposed perpendicularly to the fluid flow direction both on the lower side of the covering, and on the facing upper surface of a metal panel being positioned on the floor of the magnetic treatment chamber, while a plurality of magnetic sheets being made of a perforated metal plate with magnetic polar bars screwed to both its right edge and left edge, are inserted into, and secured to, said guide grooves respectively, and,
a stopper being deposited on, and secured to, the floor of the rear chamber or such part of the bottom panel of the casingas corresponding thereto, so as to remain positioned adjacently to the metal panel downstream.

A system as referred to above, is characterized by comprising such an air blower having a ball valve with a check valvethat is deposited on the covering in a manner that air will be blown into the front chamber through its nozzle penetrating the covering, then reaching said front chamber through the opening.

A system as referred to above, is characterized by comprising an intermediary magnetic unit being detachable from the casing by removing and inserting it through the opening.

A system as referred to in Claim 1 above, is characterized by comprising a hole or holes being perforated on a perforated metal plate, whose number can be either increased or decreased, or whose dimension can be either reduced or enlarged according to features of a fluid.

A system as referred to above is characterized by comprising a magnetic sheet and guide grooves, whose number can both be increased or decreased, respectively, according to features of a fluid.

### Disclosure of the invention

- FIG. 1: is a longitudinal section view of a system for treating a fluid with ultrahigh magnetic fields;
- FIG. 2: is a front section view of a system;
- FIG.3: is a front section view showing a structure of the rectangular parallelepied;
- FIG. 4: is a perspective view showing a structure of a system;
- FIG. 5: is a front view of a magnetic sheet;
- FIG. 6: is a side view of a magnetic sheet;
- FIG. 7: is a detail view of an intermediary magnetic unit.

Referring to respective drawings, 1 is a casing, 2 is the top panel of the casing, 3 is an opening, 4 is the bottom panel of the casing, 5 is a rectangular parallelepied, 6 is a side of the rectangular parallelepied, 6a is the right side, and 6b, the left side of the rectangular parallelepied, 7 is a side of the casing, 7a is the right side, and 7b, the left side of the casing, 8 is a trapezoidal prism, 9 is a side of the trapezoidal prism, 9a is the right side, and 9b, the left side of the trapezoidal prism, 10 is a partition panel, 11 is an inlet for a fluid, 12 is a front chamber, 13 is an outlet for a fluid, 14 is a rear chamber, 15 is a magnetic treatment chamber, 16 is a magnet chamber, 17 is a permanent magnet, 18 is a covering, 18a is the lower side of the covering, 19 is a handle of the covering, 20 is a metal panel, 20a is the upper surface of the metal panel, 21 is a stopper, 22 is guide grooves, 23 is a magnetic polar bar, 24 is a perforated metal plate, 25 is a hole or holes of perforated metal plate, 26 is the edge of perforated metal plate, 26a is one edge and 26b is the other edge of perforated metal plate, 27 is a magnetic sheet, 28 is an intermediary magnetic unit, 29 is a ball valve with a check valve, 30 is an air blower, and 31 is the nozzle of the air blower.

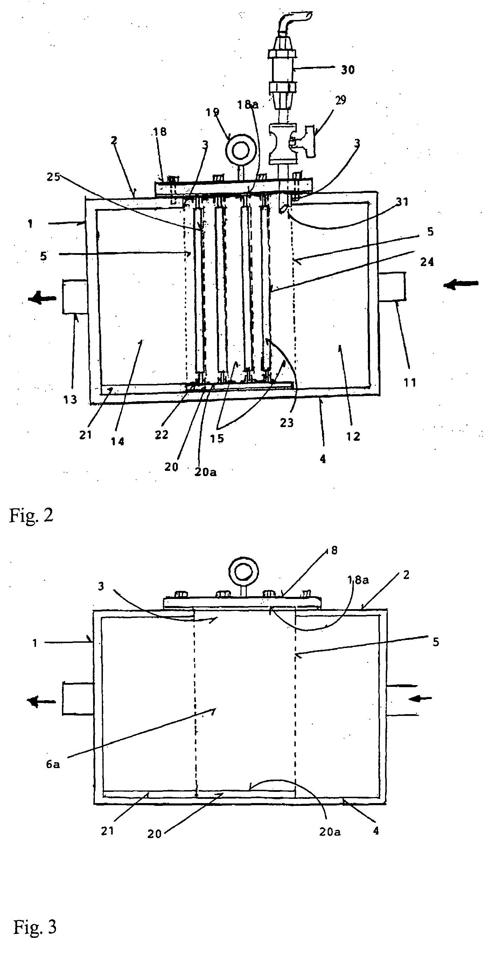

Referring to FIG. 1 and FIG. 3, a square opening 3 is perforated at the center of the top panel **2** of the box-shaped casing **1** that constitutes the body of a system for treating a fluid with ultrahigh magnetic fields

Also referring to FIG. 1, FIG. 2 and FIG. 3, a structure of the rectangular parallelepied 5 can be formed inside the casing 1 of magnetic material, such that the opening 3 substitutes for its upper base, while part of the bottom panel 4 of the casing 1 facing said upper base, for its lower base. Likewise, each structure of a pair of the trapezoidal prisms 8 can be formed on the right or left hand to the fluid flow direction as indicated by an arrow, of said casing 1 such that the right side 6a of said rectangular parallelepied 5 substitutes for the upper base of the right-hand prism 8, and the right side 7a of said casing 1, for the lower base, while the left side 6b of said rectangular parallelepied 5 substitutes for the upper base of the left-hand prism 8, and the left side 7b of said casing 1, for the lower base.

Then, the casing 1 is subdivided with partition panels 10 such that a partition panel is each deposited at both right side 9a and left side 9b of said trapezoidal prism 8, and at both right side 6a and left side 6b of said rectangular parallelepied 5.

By so doing, it is possible to form inside the casing 1, a) the front chamber 12 which is shaped into a trapezoidal prism reversely to the fluid flow direction with one base remaining open downstream; b) a rear chamber 14 which is shaped into trapezoidal prism to the fluid flow direction with one base remaining open upstream; c) a magnetic treatment chamber as communicated with both the front and rear chambers 12, 14; and d) a pair of magnet chambers 16 mutually facing on both the right hand and left hand of the casing 1 while being both deposited adjacently to the front chamber 12 , rear chamber 14 and magnetic treatment chamber 15, respectively.

Referring to FIG. 2, a pair of the magnet chambers 16 being both made air-tight are formed in the shape of a trapezoidal prism within the casing 1 on both the right hand and left hand of said casing. A box-shaped permanent magnet 17 is housed between, and secured with an adhesive to, both bases of each of said magnet chambers 16.

The casing 1 remains sealed air-tight such that the covering 18 of non-magnetic material seals the opening 3 tightly through a packing at the surface of the top panel 2 of said casing. In this case, said covering 18 is screwed securely to the casing 1 such that any screw does not break through said casing 1. Thus, the effect of air-tight sealing may not deteriorate due to leaks out of screw holes. The covering 18 can, whenever necessary, be detached by screwing it off the top panel 2 of the casing and using a handle.

As claimed in Claim 1 and Claim 3, and referring to FIG. 1 or FIG. 3, the dimension of the metal panel 20 of non-magnetic material making the base of the intermediary magnetic unit 28 is so shaped that said metal panel being deposited on the floor of a magnetic treatment chamber 15 can be detached from the casing 1 through the opening 3 by taking it out of, or inserting it into, said casing.

As illustrated in FIG. 1, a plurality of guide grooves are juxtaposed perpendicularly to the fluid flow direction, both on the upper surface 20a of the metal panel 20 and on such part of the lower side of the covering 18 that faces said upper surface 20a of the metal panel.

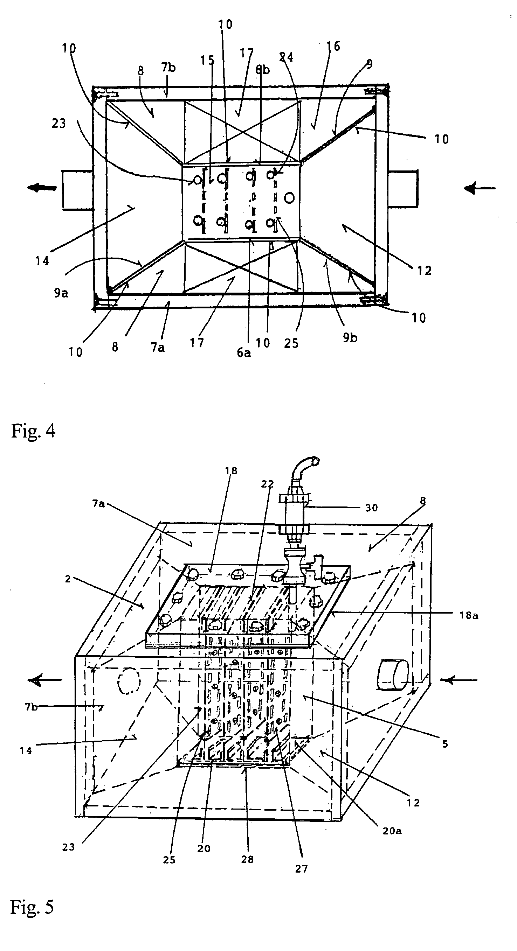

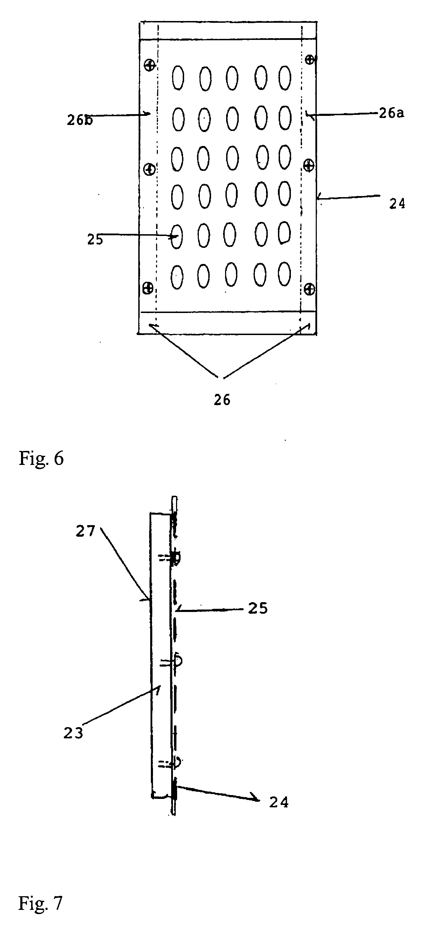

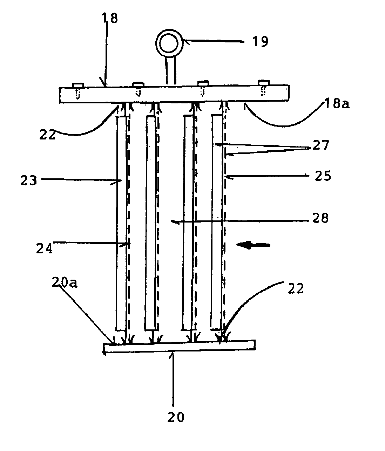

An embodiment is provided, as illustrated in FIG. 5 and FIG. 6 that a magnetic sheet 27 is composed of a perforated metal plate 24 as well as a pair of magnetic polar bars 23 of preferably stainless steel as coated with titanium oxide, which are securely screwed to the right edge 26a and left edge 26b of the reverse side of said perforated metal plate 24, respectively.

Whenever necessary for said magnetic sheet 27 to gain a stress strong enough to resist a fluid pressure, the perforated metal plate 24 is preferably reinforced such that steel sheet or the like is further fixed to both upper and lower edges of said perforated metal plate being inserted within the guide grooves 22 and supported with magnetic polar bars. And, a hole 25 as perorated thereon can be shaped into any configuration.

Referring to FIG. 7, a plurality of magnetic sheets 27 remain inserted into, and secured to, the guide grooves 22 the number of which corresponds to that of said magnetic sheets, thus forming the intermediary magnetic unit 28. While being designed detachable from the guide grooves 22, each of the magnetic sheets 27 is secured through the guide grooves to the lower side 18a of the covering 18 and the upper surface 20a of the metal panel 20.

Magnetic polar bars 23 which contribute primarily to conducting magnetic lines in the magnetic treatment chamber 15, may work to support the perforated metal plate 24, as well.

An embodiment of the invention is illustrated in FIG. 5, FIG. 6 that as claimed in Claim 1 and set forth above, the magnetic sheet 27 is composed of a perforated metal plate 24, as well as a pair of the magnetic polar bars 23 of non-magnetic material which are each screwed to the right and left edges 26a, 26b of said perforated metal plate 24.

However, another embodiment of the invention can be provided that whenever necessary to enhance magnetic fields produced within the intermediary magnetic unit 28 and to improve a magnetic treatment capability coping with a volume, velocity and other features of a fluid, the number of magnetic polar bars 23 to be screwed to a perforated metal plate 24 can be increased, and thus increased ones are juxtaposed between the above-mentioned pair of the magnetic polar bars 23.

Further, an intermediary magnetic unit 28 consisting, as described earlier, of a plurality of magnetic sheets 27, a metal panel 20, some guide grooves 22, as well as the covering 18 can be detached through the opening 3 from the casing 1 by taking it out of, or inserting it into, the casing 1, after screwing the covering 18 off the casing 1, and removing a packing.

As illustrated in FIG. 1 and FIG. 3, while the stopper 21 of non magnetic material remains secured to the base of the rear chamber 14, or corresponding part of the base 4 of the casing 1, said stopper 21 is deposited adjacently to the metal panel 20 making the base of the intermediary magnetic unit 28, lest said intermediary magnetic unit 28 should be drifted downstream off the magnetic treatment chamber 15 due to water pressures. The stopper 21 is preferably made of square steel plate.

Referring to FIG. 1 and FIG. 4, the ball valve with a check valve 29 is provided for the air blower 30 lest pressurized air bubbles being blown into the casing 1 with a compressor should flow back due to water pressures fluctuating in the system. And, as claimed in Claim 2, and illustrated in FIG. 1 and FIG. 4, the air blower is deposited on the covering 18 such that, penetrating the covering 18, then passing the opening 3, its nozzle 31 can be communicated with the front chamber 12.

By subdividing the casing 1 with partition panels 10 of non magnetic material, the front chamber 12 can, as illustrated in FIG. 2, be formed within the casing 1 in the shape of a trapezoidal prism reversely to the fluid flow direction.

The front chamber 12 is communicated with the inlet for a fluid 11 of non magnetic material which is provided at the upstream base of said front chamber 12, and the downstream base of said chamber 12 remains wide open.

While, the rear chamber 14 can likewise be formed within casing 1 in the shape of a trapezoidal prism to the fluid flow direction, such that it stands facing said front chamber 12 across the magnetic treatment chamber 15, and is communicated with the outlet for a fluid 13 of non magnetic material which is provided at the downstream base of the rear chamber 14: the upstream base of said chamber 14 remains wide open.

In addition, another embodiment of the invention is, as claimed in Claim 4, disclosed that, taking advantage of such magnetic features that the narrower a fluid flow passage is, the stronger magnetic force is produced from a magnetic field, either dimension or diameter of a hole 25 of the perforated metal plate 24 is reduced or enlarged, or the number of said hole 25 is increased or decreased according to a fluid flow velocity, volume and other fluid features, for the purpose of intensifying magnetic force, and thus producing ultrahigh magnetic fields in a magnetic treatment chamber 15. Likewise, further another embodiment can be provided, as claimed in Claim 5 that the number of magnetic sheets 27 and the corresponding number of guide grooves 22, are both increased or decreased according to features of a fluid. Those embodiments may apply to such a compact system for treating a small volume of running water emerging as its demand rises that an intermediary magnetic unit 28 is composed of only a pair of the magnetic sheets 27 as made each of a perforated metal plate 24 having one hole, say, as small as 0.6 mm to strengthen magnetic fields.

### Advantageous effect of the invention

Technical elements of the invention such as a front chamber, a rear chamber, as well as a magnet chamber, all shaped into a trapezoidal prism to accelerate a fluid flow velocity, and to produce ultrahigh magnetic fields, as well as a matrix for an intermediary magnetic unit, are so integrated that these elements can serve the significant purpose of enhancing magnetic fields and constructing simplified and smooth fluid flow passages. With ultrahigh magnetic fields thus produced, the effect of magnetic treatment with the invention was markedly improved.

Further, an intermediary magnetic unit, a pivotal part of the system of the invention producing ultrahigh magnetic fields is composed of comparatively inexpensive components such as perforated metal plates, polar bars conducting magnetic force so that an economical product can be put on the market.

A system for treating a fluid with the ultrahigh magnetic fields as disclosed in the invention can make available clean magnetized water by ionizing scale, slime and other impurities in a fluid. While, magnetic purification of a fluid is further promoted by utilizing air bubbles in which magnetic poles are located, while an intermediary magnetic unit flocculating and absorbing impurities in a fluid can be detached from the body of a system to remove such impurities and easily clean the system. As a result, regular cleaning maintenance of the system can be much facilitated so that a product both economical and congenial to environment can be put on the market.

### Description of one way of carrying out the invention

Referring to respective drawings, the system of the invention is hereinafter set forth in detail. A fluid will diffuse, then decelerate its flow velocity upon its running out of a narrow passage of a water conduit into a wider capacity of the front chamber 12 which is, as described earlier and illustrated in FIG 2, shaped into a trapezoidal prism reversely to the fluid flow direction such that its capacity is made wider upstream, while tapering off downstream. While flowing toward the narrower base of the front chamber 12, the fluid gains its flow velocity upon passing through holes 25 of the perforated metal plates and entering a narrow passage as formed by the magnetic treatment chamber 15. The fluid thus crosses perpendicularly through the intermediary magnetic unit 28 as housed inside said magnetic treatment chamber 15.

As set forth earlier, it is characteristic elements of the invention that an intermediary magnetic unit 28 is designed to produce ultrahigh magnetic fields in the system with its structure that comprises perforated metal plates 24 and magnetic polar bars 23, and such major components of said unit 28 are available on the market all the time, thereby making possible to bring down production cost of the system. Further, the intermediary magnetic unit can optimally be composed of perforated metal plates 24 and magnetic polar bars 23 according to the flow velocity, volume or other features of a fluid. In other words, taking into account of such flow velocity, volume or other features of a fluid, optimal magnetic treatment of a fluid is possible, as claimed in Claim 4 and Claim 5, by narrowing or enlarging the diameter of a hole 25 of the perforated metal plate 24 while increasing or decreasing the number of holes 25, as well as the number of magnetic sheets 27 and the corresponding number of a guide grooves 22.

In an embodiment of the invention for treating a large volume of a fluid with ultrahigh magnetic fields, the magnetic effect of producing magnetized pure water is pronouncedly enhanced by enlarging the size or diameter of a hole 25 while increasing the number of magnetic sheets 27 and that of guide grooves 22. Besides the embodiment for magnetically treating a large volume of a fluid, another embodiment may be provided in which the size or diameter of a hole 22 is narrowed while decreasing the number of holes 22. A combination of any of the above embodiments may optimally be performed accommodating the volume and other features of a fluid.

Further, as set forth above, it is possible to put on the market with its market demand growing, such a compact system, an embodiment of the invention, for supplying purified running water, that is provided with an intermediary magnetic unit 28 comprising only a pair of magnetic sheets 27 being made of a perforated metal plate 24 with only one hole 25 of less than 1 mm in diameter, for example. Said pair of magnetic sheets 27 are each deposited upstream and downstream in the magnetic treatment chamber 15.

Transformed into air bubbles under a given pressure accommodating to features of a fluid, pressurized air is blown by the compressor of an air blower 30 through its ball valve with a check valve 29 into the front chamber 12 in the shape of a trapezoidal prism reversely to the fluid flow direction, where said air bubbles are mixed efficiently with a fluid upon flowing into a wide capacity of said front chamber, thus producing an air turbulence. In this case, according to an embodiment of the invention as illustrated in FIG 1 and FIG 3, the nozzle 31 of the air blower 30 penetrating the covering 18, then reaching the front chamber 12, is, for the purpose of effectively mixing a fluid with air bubbles, deposited at the nearest area to, and at the upper part of, the magnetic sheet 27 being placed in the first row to the fluid flow direction in the front chamber 12.

However, with a compressor as powered by a pressure range of 0.73 kPa to 0.93 kPa, the smooth mixing of pressurized air with a fluid would unlikely be well accomplished because a fluid normally has a pressure as high as 2 kPa. In such case, the nozzle 31 of the air blower is preferably deposited at lower part of the above-mentioned magnetic sheet 27, taking advantage of a feature of air bubbles floating upward in water.

Air bubbles are generally considered working as a conductor of magnetic force to enhance the effect of magnetic treatment of a fluid, because magnetic poles are located by nature in air bubbles and so work. A fluid mixed with air bubbles accelerates its flow velocity while flowing through passages formed by either a plurality of magnetic sheets 27 as juxtaposed perpendicularly and longitudinally to the fluid flow direction, or through holes 25 of perforated metal plates. Then, the fluid continues to flow perpendicularly through ultrahigh magnetic fields being produced within the intermediary magnetic unit 28 from a pair of permanent magnets 17 as housed in a pair of magnet chambers 16 which are each located on the right hand and left hand of the casing 1. Thus, further excited by air bubbles having magnetic poles, the fluid is magnetically purified effectively. With magnetic treatment thus effectuated, scale, slime and other impurities in the fluid are all ionized, then flocculated and absorbed to the intermediary magnetic unit 28. These impurities can regularly be removed by maintenance of equipment as provided by the invention.

The rear chamber 14 is, as claimed in Claim 1, shaped into a trapezoidal prism to the fluid flow direction: as referred to above, a fluid well treated magnetically within the magnetic treatment chamber 15, decelerates its flow velocity and its flow is rectified upon entering the rear chamber 14 widening toward the downstream base. Thus, a mixture of the fluid with air bubbles is much facilitating. Due partly to magnetization of air bubbles, the magnetic treatment of a fluid provided by the system of the invention contributes to effectively encouraging the ionization of scale, slime and other impurities. A magnetized fluid as purified and ionized by mixing with air bubbles flows out of the outlet for a fluid 13 of the system

Moreover, as claimed in Claim, the intermediary unit 28 is designed such that screwing the covering 18 off the casing, the unit can be detached from the casing by taking it out through the opening 3 made on the top panel 2 of the casing.

Scale, slime and flocs are all freed from a fluid, then stuck to magnetic sheets 27 of the intermediary unit 28 in the course of magnetic treatment can, as set forth above, easily be removed and cleaned by taking the intermediary unit 28 out of the casing 1. In this way, regular cleaning of the system can be much facilitated.

As set forth earlier, an intermediary unit 28 as housed in a magnetic treatment chamber 15 is so designed that whenever necessary, it can be detached from the casing 1.

The stopper 21 is deposited on, and secured to, the base 4 of the rear chamber 1, or the corresponding part of the bottom 4 of the casing 1. Further, said stopper is positioned adjacently to the metal panel 2 constituting the base of the intermediary unit 28, lest said unit 28 should be drifted downstream off the magnetic treatment chamber 15 due to a fluid flow pressure. Such drifting downstream of the intermediary magnetic unit is prevented due partly to the stress of guide grooves 22 where the unit remains inserted.

## Claims

1. A system for treating a fluid with ultrahigh magnetic fields comprising;
a square opening being perforated at the center of the top panel of a box-shaped casing constituting a body of said system, and,
a front chamber being shaped into a trapezoidal prism reversely to the fluid flow direction, and connected with an inlet for a fluid:
a rear chamber being shaped into a trapezoidal prism to the fluid flow direction, and connected with an outlet for a fluid:
a case-shaped magnetic treatment chamber connecting the front chamber with the rear chamber, and:
a pair of mutually facing magnet chambers in the shape of a trapezoidal prism being each deposited adjacently to said front chamber, magnetic treatment chamber and rear chamber, respectively:
which are all formed within the casing by subdividing said casing with partition panels being positioned, at the facing sides of such a rectangular parallelepied as can be formed within the casing in a manner that the opening substitutes for its upper base, and part of the bottom panel of the casing facing said opening, for its lower base, as well as at the respective facing sides of such a pair of trapezoidal prism as can be each formed in a manner that the mutually facing right side and left side of said rectangular parallelepied substitute for the respective upper bases of said trapezoidal prisms, and both mutually facing right side and left side of the casing, for the respective lower bases of said rectangular parallelepied,
a permanent magnet being housed between, and secured to, both bases of each of said magnet chambers being shaped into a trapezoidal prism,
a covering being laid over the opening so as to make the casing air-tight,
an intermediary magnetic unit being provided such that a plurality of guide grooves are juxtaposed perpendicularly to the fluid flow direction both on the lower side of the covering, and on the facing upper surface of a metal panel being positioned on the floor of the magnetic treatment chamber, while a plurality of magnetic sheets being made of a perforated metal plate with magnetic polar bars screwed to both its right edge and left edge, are inserted into, and secured to, said guide grooves respectively, and,
a stopper being deposited on, and secured to, the floor of the rear chamber or such part of the bottom panel of the casing as corresponding thereto, so as to remain positioned adjacently to the metal panel downstream.

2. A system as referred to in Claim 1 above, comprising such an air blower having a ball valve with a check valve that is deposited on the covering in a manner that air will be blown into the front chamber through its nozzle penetrating the covering, then reaching said front chamber through the opening.

3. A system as referred to in Claim 1 above, comprising an intermediary magnetic unit being detachable from the casing by removing and inserting it through the opening..

4. A system as referred to in Claim 1 above, comprising a hole or holes being perforated on a perforated metal plate, whose number can be either increased or decreased, or whose dimension can be either reduced or enlarged according to features of a fluid.

5. A system as referred to in Claim 1 above, comprising a magnetic sheet and guide grooves, whose number can both be increased or decreased, respectively, according to features of a fluid.
